**Europäisches Patentamt**

**European Patent Office**

**Office européen des brevets**

(19)

(11) Veröffentlichungsnummer: **0 068 146**
**B1**

# EUROPÄISCHE PATENTSCHRIFT

(12)

(45) Veröffentlichungstag der Patentschrift:
03.10.84

(21) Anmeldenummer: **82104577.0**

(22) Anmeldetag: **26.05.82**

(51) Int. Cl.³: **C 08 F  6/26** // (C08F6/26, 10/06)

(54) Verfahren zum Desodorieren feinteiliger, mittels Ziegier-Natta-Katalysatoren erhaltener Propylenpolymerisate.

(30) Priorität: **06.06.81  DE 3122679**

(43) Veröffentlichungstag der Anmeldung:
**05.01.83 Patentblatt 83/1**

(45) Bekanntmachung des Hinweises auf die Patenterteilung:
**03.10.84 Patentblatt 84/40**

(84) Benannte Vertragsstaaten:
**AT BE DE FR GB IT NL**

(56) Entgegenhaltungen:
**FR - A - 2 185 639**
**GB - A - 1 272 778**

(73) Patentinhaber: **BASF Aktiengesellschaft,**
**Carl-Bosch-Strasse 38, D-6700 Ludwigshafen (DE)**

(72) Erfinder: **Jaggard, James F.R., Dr., Bordollo Ring 21,**
**D-6718 Gruenstadt (DE)**
Erfinder: **Best, Walter, Dr., Im Spiess 2,**
**D-6714 Weisenheim (DE)**
Erfinder: **Klaerner, Peter, Dr., Hauptstrasse 62,**
**D-6719 Battenberg (DE)**
Erfinder: **Blei, Peter, Berliner Strasse 16, D-6702 Bad**
**Duerkheim (DE)**

## Beschreibung

Die Erfindung liegt im Rahmen eines Verfahrens zum Desodorieren feinteiliger, einen Teilchendurchmesser von 1 bis 6000, insbesondere 50 bis 3000 µm aufweisender, unmittelbar durch Homopolymerisation von Propylen oder Copolymerisation von Propylen mit bis zu 20, insbesondere bis zu 10 mol-% Ethylen unter Anwendung von Ziegler-Natta-Katalysatoren — vorzugsweise in einem trockenen Bett aus feinteiligem Olefinpolymerisat — erhaltener Olefinpolymerisate mittels eines die Olefinpolymerisate bei einer Temperatur, die wenigstens 10, vorzugsweise wenigstens 30° C, unter der Kristallitschmelztemperatur des jeweils betroffenen Olefinpolymerisats liegt durchströmenden, die Geruchsstoffe aufnehmenden Mediums, wobei dieses Medium eine Kohlenstoffverbindung ist.

Verfahren dieser Art sind bekannt, wobei auf das in der GB-PS Nr. 1272778 beschriebene als Prototyp hingewiesen werden kann.

Der technische Erfolg der bekannten Verfahren ist nicht zu bestreiten, doch haftet ihnen insofern ein gewisses Manko an, als die Verweilzeit der feinteiligen Olefinpolymerisate in dem durchströmenden Medium relativ lang gewählt werden muss.

Hier setzt die Aufgabe an, die zur vorliegenden Erfindung geführt hat: Ein Verfahren der eingangs definierten Art aufzuzeigen, das mit dem vorerwähnten Nachteil nicht mehr belastet ist, d.h. die Wahl kurzer Verweilzeiten erlaubt ohne deshalb den sonstigen technischen Erfolg zu verringern.

Es wurde nun gefunden, dass die gestellte Aufgabe mit ausgewählten Medien gelöst werden kann, wenn die Durchströmung der Olefinpolymerisate bei einer bestimmten — insbesondere einer relativ niederen — Temperatur stattfindet und das durchströmende Medium unter einem hohen Druck sowie auch in einer bestimmten Menge angewendet wird.

Gegenstand der vorliegenden Erfindung ist dementsprechend ein Verfahren zum Desodorieren feinteiliger, einen Teilchendurchmesser von 1 bis 6000, insbesondere 50 bis 3000 µm aufweisender, unmittelbar durch Homopolymerisation von Propylen oder Copolymerisation von Propylen mit bis zu 20, insbesondere bis zu 10 mol-% Ethylen unter Anwendung von Ziegler-Natta-Katalysatoren — vorzugsweise in einem trockenen Bett aus feinteiligem Olefinpolymerisat (Gasphasenpolymerisation) — erhaltener Olefinpolymerisate mittels eines die Olefinpolymerisate bei einer Temperatur, die wenigstens 10, vorzugsweise wenigstens 30° C, unter der Kristallitschmelztemperatur des jeweils betroffenen Olefinpolymerisates liegt, durchströmenden, die Geruchsstoffe aufnehmenden Mediums, wobei dieses Medium eine Kohlenstoffverbindung ist.

Das erfindungsgemässe Verfahren ist dadurch gekennzeichnet, dass die Kohlenstoffverbindung i) ein nicht mehr als drei Kohlenstoffatome, vorzugsweise ein zwei oder drei Kohlenstoffatome, aufweisendes Alkan oder Alken, ii) ein fluoriertes und/oder chloriertes Methan oder Ethan oder iii) Kohlendioxid ist, und dass die Durchströmung bei einer Temperatur von 5 bis 120, insbesondere 5 bis 110° C, stattfindet und das durchströmende Medium unter einem Druck von 30 bis 300 bar sowie in einer Menge von 0,1 bis 20, insbesondere 1 bis 15 Nm³/kg Olefinpolymerisat angewendet wird.

Die Bedingung mit dem grössten Gewicht ist hierbei die Druckbedingung, gefolgt von der Temperaturbedingung. Vornehmlich diese Bedingungen sind es auch, die das erfindungsgemässe Verfahren von den bekannten absetzen.

Durch das neue Verfahren wird es möglich, mit kurzen Verweilzeiten der feinteiligen Olefinpolymerisate in dem durchströmenden Medium zu arbeiten. Mitunter reichen bereits Verweilzeiten von 3 min aus, wenn erstere auch im allgemeinen 5 bis 120 und insbesondere 15 bis 60 min betragen sollten.

Das Verfahren bewirkt nicht nur eine effektive Desodorierung der Olefinpolymerisate, sondern auch eine deutliche Abnahme der in diesen ursprünglich enthaltenen niedermolekularen Anteile.

Die Durchführung des erfindungsgemässen Verfahrens ist einfach und kann mit bekannten, zur Durchströmung feinteiliger Feststoffe mit einem unter hohem Druck stehenden Medium konzipierten Vorrichtungen durchgeführt werden. Insoweit ist das neue Verfahren mit keinen Besonderheiten verbunden.

Nachstehend ist — in Verbindung mit der anhängenden Figur — eine zweckmässige Ausgestaltung des erfindungsgemässen Verfahrens, so wie es auch in den Beispielen durchgeführt wird — rein schematisch — dargestellt:

Das zur Durchströmung bestimmte Medium wird mit Hilfe des Förderaggregats 1 und des Wärmeaustauschers 2 auf die gewünschten Druck- und Temperaturbedingungen gebracht. Über das Ventil 3 und den Sintermetallfilter 4 wird das so temperierte und komprimierte Medium in den Druckbehälter 5 eingeleitet. Dieser ist mit dem zu desodorierenden Olefinpolymerisat gefüllt. Der Druckbehälter selbst wird mit einer Temperaturregelvorrichtung auf der gewünschten Arbeitstemperatur gehalten. — Das am Boden des Druckbehälters 5 eintretende Medium durchströmt das Olefinpolymerisat, nimmt die in letzterem enthaltenen Geruchsstoffe sowie auch niedermolekulare Anteile auf und verlässt über die Sintermetallfritte 6 und das Feindosierventil 7 den Druckbehälter. Im Feindosierventil erfolgt Entspannung auf Atmosphärendruck. Gleichzeitig wird so viel frisches Medium dem Druckbehälter zugeführt, dass in diesem der Druck konstant bleibt.

Wie sich gezeigt hat, gibt es für die einzelnen Medien individuelle Temperatur-Druck-Verhältnisse, bei denen jeweils besonders gute Ergebnisse erhalten werden. Durch einfache Versuche lassen sich diese Verhältnisse leicht ermitteln. Für einige Medien sind besonders zweckmässige Temperatur sowie Druckbereiche in der nachstehenden Tabelle angegeben.

| Medium Art | Bereiche | |
|---|---|---|
| | Temperatur (°C) | Druck (bar) |
| Ethan | 30 bis 50 | 50 bis 100 |
| Propan | 95 bis 110 | 40 bis 60 |
| Ethylen | 10 bis 50 | 50 bis 120 |
| Propylen | 90 bis 110 | 45 bis 120 |
| $CHF_3$ | 25 bis 45 | 45 bis 120 |
| $CO_2$ | 30 bis 60 | 70 bis 120 |

Ausser den in der Tabelle genannten kommen für den erfindungsgemässen Zweck als Medien z.B. noch in Betracht Methan, Cyclopropan, $CH_3F$, $CH_4$, $CH_3Cl$, $CHF_2Cl$, $CF_3Cl$, $CF_2Cl_2$, $FH_2C-CH_3$, $FH_2C-CH_2F$, $F_3C-CH_2F$ bzw. Gemische aus zwei oder mehr der vorstehend sowie in der Tabelle als Einzelindividuen aufgeführten Medien.

Es hat sich ferner gezeigt, dass es nach dem Arbeiten mit Medien, die einen Eigengeruch besitzen, wie Alkane und Alkene, im allgemeinen zweckmässig ist, die mit Restmengen an diesen Medien behafteten Olefinpolymerisate mit einem geruchsneutralen Gas, wie Stickstoff oder Kohlendioxid, nachzuspülen.

Die nach dem erfindungsgemässen Verfahren zu desodorierenden Olefinpolymerisate sind solche, die in feinteiliger Form unmittelbar durch Polymerisation mittels Ziegler-Natta-Katalysatoren erhalten worden sind. Hierzu zählen Olefinpolymerisate, di erhalten worden sind durch Fällungspolymerisation in einem flüssigen, inerten Kohlenwasserstoff, in dem das Monomere bzw. das Monomerengemisch löslich, das Polymerisat dagegen unlöslich ist. Das neue Verfahren zum Desodorieren eignet sich jedoch insbesondere für Olefinpolymerisate, die in einem trockenen Bett ausfeinteiligem Olefinpolymerisat, d.h. durch sogenannte Gasphasenpolymerisation, erhalten worden sind, z.B. in einem gewirbelten Bett (= Wirbelbettverfahren) oder einem gerührten Bett (Festbettverfahren). Diese Varianten der Polymerisation sind wohlbekannt und in der Technik eingeführt; typische Beschreibungen finden sich z.B. in den GB-PS Nrn. 837301, 1006469, 1032945 und 1354020.

Sinngemäss das Gleiche gilt für die dabei zur Polymerisation eingesetzten Ziegler-Natta-Katalysatoren; es sind dies in der Regel ekanntlich Katalysatoren auf der Basis von I einer – gegebenenfalls auf einem Trägerstoff befindlichen – Titankomponente, insbesondere Titanchloridkomponente und II einer Aluminiumalkylkomponente der allgemeinen Formel $AlR_3$ bzw. $ClAlR_2$ – worin R für einen $C_1$- bis $C_8$-Alkylrest steht – im Atomverhältnis Titan aus der Katalysatorkomponente I: Aluminium aus der Katalysatorkomponente II von 1:1 bis 1:100. Mittels solcher Katalysatoren hergestellte Olefinpolymerisate lassen sich jedenfalls nach dem erfindungsgemässen Verfahren besonders gut desodorieren und auch in ihrem Gehalt an niedermolekularen Anteilen reduzieren. Dabei spielt es eine untergeordnete Rolle, welcher Art im einzelnen die zur Polymerisation eingesetzte Titanchloridkomponente I gewesen ist; so können es z.B. gewesen sein: Ia Titantrichloride als solche und Titantrichloridcokristallisate mit Metallhalogeniden, insbesondere Aluminiumchlorid, etwa der Formel $TiCl_3 \cdot \frac{1}{3} AlCl_3$ – vgl. z.B. die US-PS Nrn. 3128252 und 3814743 –, oder Ib mit Elektronendonatoren bzw. Lewis-Basen modifizierte Titantrichloride bzw. Titantrichloridcokristallisate der unter Ia bezeichneten Art – vgl. z.B. die GB-PS Nrn. 851113, 1447706, 1485181 und 1512730 sowie die US-PS Nrn. 4120823, 4154699, 4154700 und 4229318.

Zur Veranschaulichung der Erfindung dienen die nachstehend beschriebenen Beispiele; in ihnen wird durchweg zum Desodorieren eingesetzt ein feinteiliges, einen Teilchendurchmesser von 100 bis 1700 µm aufweisendes, unmittelbar durch Homopolymerisation von Propylen mittels eines Ziegler-Natta-Katalysators in einem trockenen Bett aus feinteiligem Olefinpolymerisat gemäss der US-PS Nr. 4154699, Beispiel 2, erhaltenes, eine Kristallitschmelztemperatur von 161°C besitzendes Polypropylen.

*Beispiele 1 bis 6*

Zu ihrer Durchführung dient eine an sich bekannte Vorrichtung, wie sie weiter oben sowie in der anhängenden Figur erläutert ist; das Nutzvolumen des Druckbehälters 5 beträgt 0,3 l undist in allen Beispielen mit dem vorgenannten feinteiligen Polypropylen zu 80% ausgefüllt.

In der folgenden Tabelle 1 ist angegeben, welches Medium bei welcher Temperatur unter welchem Druck in welcher Menge über welche Zeitspanne in den enzelnen Beispielen angewendet wird, ferner die dadurch erreichte Änderung (= Verminderung) des Geruchs in Geruchsnoteneinheiten (ΔGNE) nach DIN 10955 (2 h bei 80°C), wobei als Standardvergleichsmuster das unbehandelte Polypropylen dient.

*Tabelle 1*

| Beispiel Nr. | Medium Art | Temperatur (°C) | Druck (bar) | Menge (Nm³/kg) | Zeit (min) | ΔGNE DIN 10955 |
|---|---|---|---|---|---|---|
| 1 | $CO_2$ | 40 | 100 | 3,0 | 10 | −2,0 |
| 2 | Ethan | 40 | 100 | 3,0 | 15 | −2,5 |
| 3 | Ethylen | 40 | 100 | 3,0 | 16 | −2,3 |
| 4 | Propan | 105 | 50 | 2,5 | 15 | −3,0 |
| 5 | Propylen | 100 | 50 | 3,0 | 14 | −3,0 |
| 6 | $CHF_3$ | 40 | 55 | 3,2 | 19 | −1,5 |

*Vergleichsversuche 1 bis 6*

Es wird in völliger Analogie zu den Beispielen gearbeitet, mit den drei einzigen Ausnahmen, dass die Behandlungstemperatur einheitlich 105°C, der Behandlungsdruck einheitlich 4 bar und die Behandlungszeit jeweils das dreifache betragen. Die hierbei erhaltenen Ergebnisse finden sich in der nachstehenden Tabelle 2.

*Tabelle 2*

| Vergleichversuch Nr. | Medium Art | ΔGNE DIN 10 955 |
|---|---|---|
| 1 | $CO_2$ | −1,0 |
| 2 | Ethan | −1,1 |
| 3 | Ethylen | −1,0 |
| 4 | Propan | −0,5 |
| 5 | Propylen | −0,9 |
| 6 | $CHF_3$ | −0,5 |

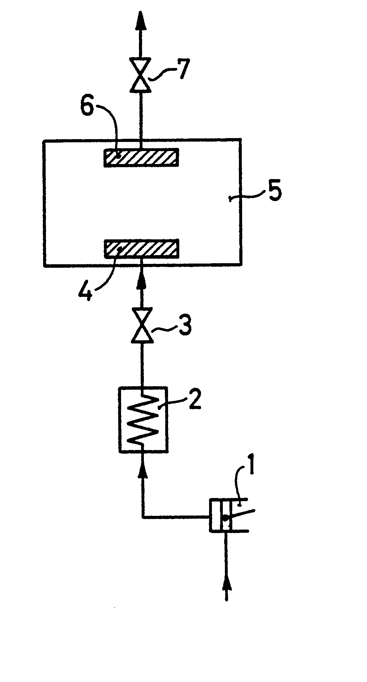

**Patentanspruch**

Verfahren zum Desododieren feinteiliger, einen Teilchendurchmesser von 1 bis 6000 µm aufweisender, unmittelbar durch Homopolymerisation von Propylen oder Copolymerisation von Propylen mit bis zu 20 mol-% Ethylen unter Anwendung von Ziegler-Natta-Katalysatoren erhaltener Olefinpolymerisate mittels eines die Olefinpolymerisate bei einer Temperatur, die wenigstens 10°C unter der Kristallitschmelztemperatur des jeweils betroffenen Olefinpolymerisats liegt, durchströmenden, die Geruchsstoffe aufnehmenden Mediums, wobei dieses Medium eine Kohlenstoffverbindung ist, dadurch gekennzeichnet, dass die Kohlenstoffverbindung i) ein nicht mehr als drei Kohlenstoffatome aufweisendes Alkan oder Alken, ii) ein fluoriertes und/oder chloriertes Methan oder Ethan oder iii) Kohlendioxid ist, und dass die Durchströmung bei einer Temperatur von 5 bis 120°C stattfindet und das durchströmende Medium unter einem Druck von 30 bis 300 bar sowie in einer Menge von 0,1 bis 20 Nm³/kg Olefinpolymerisat angewendet wird.

**Claim**

A process for deodorizing a finely divided olefin polymer which has a particle diameter of from 1 to 6,000 µm and has been obtained directly by homopolymerization of propylene or copolymerization of propylene with up to 20 mol % of ethylene, in the presence of a Ziegler-Natta catalyst, by means of a medium which flows through the olefin polymer at a temperature that is at least 10°C below the crystallite melting point of the particular polymer, and takes up the odoriferous substances, this medium being a hydrocarbon compound, wherein the hydrocarbon compound is (*i*) an alkane or alkene of not more than three carbon atoms, (*ii*) a fluorinated and/or chlorinated methane or ethane or (*iii*) carbondioxide, and flows through the polymer at from 5 to 120°C, under a pressure of from 30 to 300 bar, and in an amount of from 0.1 to 20 m³ (S.T.P.) per kg of olefin polymer.

**Revendication**

Procédé pour désodoriser les polymères oléfiniques préparés par une homopolymérisation du propylène ou une copolymérisation du propylène avec jusqu'à 20% molaires d'éthylène en présence de catalyseurs de Ziegler-Natta, en fines particules d'une granulométrie comprise entre 1 et 6000 µm, immédiatement après leur préparation, à l'aide d'un milieu traversant les polymères oléfiniques à une température inférieure d'au moins 10°C à la température de fusion des cristallites du polymère oléfinique à traiter et absorbant les matières odorantes, ce milieu étant un composé carboné, caractérisé en ce que le composé carboné est soit

i) un alcane ou alcène ne comportant pas plus de trois atomes de carbone, soit ii) du méthane ou de l'éthane fluoré et/ou chloré, soit

iii) de l'anhydride carbonique,
le passage est réalisé à une température de 5 à 120°C et le milieu absorbant est mis en œuvre à raison de 0,1 à 20 m³ normaux par kilo de polymère oléfinique et sous une pression de 30 à 300 bar.